# EUROPÄISCHE PATENTSCHRIFT

(11) **EP 1 807 267 B1**
(45) Veröffentlichungstag und Bekanntmachung des Hinweises auf die Patenterteilung: **06.08.2008**
(21) Anmeldenummer: 05789690.4
(22) Anmeldetag: 08.09.2005
(51) Int. Cl.: B60W 50/08

(54) **VERFAHREN ZUR FAHRERUNTERSTÜTZUNG**
DRIVER ASSISTANCE METHOD
PROCEDE D'ASSISTANCE AU CONDUCTEUR

(30) Priorität: 25.10.2004 DE 102004051963
(43) Veröffentlichungstag der Anmeldung: 18.07.2007
(73) Patentinhaber: ROBERT BOSCH GMBH, 70442 Stuttgart (DE)
(72) Erfinder: PLACKE, Lars, 30163 Hannover (DE); BIESTER, Lars, 30171 Hannover (DE)
(86) Internationale Anmeldenummer: PCT/EP2005/054455
(87) Internationale Veröffentlichungsnummer: WO 2006/045667

(56) Entgegenhaltungen:
- EP-A- 0 931 712
- WO-A-03/045726
- WO-A-03/055734
- WO-A-20/04007232
- WO-A-20/04025323
- DE-A- 4 339 066
- DE-A- 10 114 470

## Beschreibung

### Stand der Technik

Die Erfindung geht aus von einem Verfahren zur Fahrerunterstützung nach der Gattung des Hauptanspruchs. Es sind schon Fahrerassistenzsysteme bekannt, die einen Fahrer bei der Steuerung eines Kraftfahrzeugs unterstützen. Hierbei sind einerseits warnende Systeme bekannt, bei denen Sensoren das Fahrzeug selber oder die Fahrzeugumgebung überwachen. Wird ein Zustand festgestellt, vor dem der Fahrer gewarnt werden soll, so wird eine Warnung insbesondere akustisch oder optisch an den Fahrer ausgegeben. Eine Fahrhandlung, also eine Reaktion auf die Warnung, muss der Fahrer hierbei jedoch selbst vornehmen. Ferner sind auch Fahrerassistenzsysteme bekannt, bei denen Fahrhandlungen automatisch durchgeführt werden, nachdem ein Fahrerassistenzsystem eine entsprechende, die Fahrhandlung erfordernde Situation erfasst hat. Z.B. ist es hierbei bekannt, eine Geschwindigkeitsregelung in Abhängigkeit von einem Abstand zu einem vorausfahrenden Fahrzeug automatisch vorzunehmen. Ferner sind auch automatische Einparkvorrichtungen bekannt, die ein Fahrzeug automatisch in eine Parklücke einparken. Um eine automatische Unterstützung zu erhalten, muss ein Fahrer zunächst das System selbständig aktivieren. Auf die anschließende, automatische Durchführung hat er im Allgemeinen keinen Einfluss mehr bzw. kann lediglich eine entsprechende, automatisch vorgenommene Regelung vollständig abbrechen. Bei der Bewertung der Fahrsituation des Fahrzeugs sind im Allgemeinen starre Funktionsverteilungen für einzelne Systeme vorgesehen, die nach klaren Algorithmen unter Berücksichtigung statischer Grenzwerte in Abhängigkeit von verschiedenen, gespeicherten Parametern ein Systemverhalten zeigen. Wird eine EinStellung vorgenommen, so bleibt diese Einstellung im Allgemeinen auch für die Zukunft bestehen.

Aus der WO 03/055 734 A1 ist ein computerbasierter Parkassistent bekannt, bei dem eine Parklücke erfasst und ein Einparkweg in die Parklücke bestimmt wird. Ein automatisches Einparken erfolgt nach einer Bestätigung durch einen Benutzer.

Aus der DE 43 390 66 A1 ist eine Einparkhilfe mit Bremseingriff bekannt, bei der die Bremskraft umso größer wird, je geringer der Abstand wird. Bei einem bestimmten Grenzwert wird die Bremskraft so groß, dass das Fahrzeug nicht weiterbewegt werden kann. Mit Hilfe eines Schalters ist der Bremseingriff aufhebbar, so dass das Fahrzeug ungehindert bewegt werden kann.

Aus der WO 2004/007 232 A1 ist ein Verfahren zur Unterstützung des Fahrers bei Fahrmanövern bekannt. Hierzu wird eine Referenztrajektorie bestimmt, entlang der das Fahrzeug bewegt werden soll. Über eine Anforderung kann ein Einparkverfahren angefordert werden.

Aus der WO 2004/025 323 A1 ist ein Fahrerassistenzsystem für ein Straßenfahrzeug bekannt, bei dem erkannt wird, weicher Fahrer das Fahrzeug fährt. Abhängig davon wird entschieden, ob und/oder welche Hilfeinformationen an den Fahrer ausgegeben werden.

### Vorteile der Erfindung

Das erfindungsgemäße Verfahren zur Fahrerunterstützung mit den Merkmalen des Hauptanspruchs hat demgegenüber den Vorteil, dass eine starre Funktionsvorschrift für warnende bzw. automatisch reagierende Fahrerfunktionsvorschrift durch eine adaptive Reaktion des Fahrerassistenzsystems ersetzt wird. Um die Adaption zu ermöglichen, wird ein Dialog zwischen dem Fahrerassistenzsystem und dem Fahrer durchgeführt. Hierzu schlägt das Fahrerassistenzsystem dem Fahrer eine Handlung vor, die es im Rahmen der vorliegenden Fahrsituation für erforderlich hält. Diese Handlung wird jedoch nur dann wie geplant ausgeführt bzw. bis zum Schluss ausgeführt, wenn der Fahrer die Handlung entweder bestätigt bzw. sie nicht abbricht oder korrigiert. Im Gegensatz zu einem rein warnenden System kann der Fahrer nunmehr durch eine einfache Interaktion das Fahrerassistenzsystem auffordern, die erforderliche Fahrhandlung selbst durchzuführen. Umgekehrt kann der Fahrer in die Fahrhandlung auch problemlos eingreifen, wenn die aktuelle Fahrsituation es erfordert bzw. wenn die Fahrsituation von dem Fahrerassistenzsystem nicht in zutreffender Weise erfasst wurde.

Wenn der Fahrer eine der Gesamtsituation unangebrachte Handlung ausführen möchte, kann das Fahrerassistenzsystem den Fahrer auch überstimmen, z.B. wenn der Fahrer ein im Toten Winkel detektiertes Fahrzeug nicht gesehen hat und auch zunächst nicht kommuniziert, das er sicher ist, das es dort kein Fahrzeug gibt, er aber ausscheren möchte. Dann wird z.B. eine Spurhaltung auf der ursprünglichen Spur durch das System trotzdem aufrecht erhalten, kann aber anschließend durch den Fahrer überstimmt werden, sollte dieser die Situation als ungefährlich einschätzen, z.B. wenn er sich durch Blickkontakt mit dem Fahrer des Fahrzeugs im toten Winkel über den Spurwechsel verständigt hat.

Insgesamt wird hierdurch die Bedienung eines Fahrerassistenzsystems erleichtert, da ein Fahrer Parameter des Fahrerassistenzsystems nicht selbst vorgeben muss, sondern durch eine unmittelbare Reaktion das Fahrerassistenzsystem in Abhängigkeit von der aktuellen Situation zu einer von ihm gewünschten Arbeitsweise auffordern kann. So kann der Fahrer zwischen einem automatischen Eingriff und einer selbstständigen Steuerung des Fahrzeugs durch den Fahrer in beliebiger Weise wählen. Durch den Dialog, in dem verhandelt wird, wer die notwendigen Teilaufgaben bei der Steuerung des Fahrzeugs übernimmt, kann der Fahrer eine Hilfestellung in einem von ihm gewünschten Umfang erreichen, ohne aufwendige Bedieneingaben zur Steuerung des Fahrerassistenzsystems vornehmen zu müssen. Damit wird die Akzeptanz des Fahrerinformationssystems erhöht. Somit steigt die Bereitschaft, Hilfe von einem Fahrerassistenzsystem anzunehmen. Dies wiederum trägt zur Erhöhung der Verkehrssicherheit bei.

Erfindungsgemäß wird damit eine Kooperation zwischen dem Fahrer und dem Fahrerassistenzsystem erreicht, bei der beide dynamisch Teile einer Gesamtaufgabe übernehmen, um ein optimales Ergebnis zu erreichen.

Durch die in den Unteransprüche aufgeführten Maßnahmen sind vorteilhafte Weiterbildungen und Verbesserungen des im Hauptanspruch angegebenen Verfahrens zur Fahrerunterstützung möglich. Besonders vorteilhaft ist es, bei einer eingegebenen Abbruchanweisung eine Vorschrift zur Bewertung der Fahrsituation anzupassen. Ebenfalls vorteilhaft ist es, eine Anpassung auch dann vorzunehmen, wenn der Fahrer eine Fahrhandlung durchführt, die für das Fahrerassistenzsystem relevant ist, die das Fahrerassistenzsystem aber nicht oder nicht in der durchgeführten Weise empfohlen hätte. Indem in Abhängigkeit von der Fahrerreaktion eine Bewertung der Fahrsituation geändert wird, kann ein lernendes System geschaffen werden. Umgekehrt kann auch der Fahrer lernen, indem er z.B. bei Einparkvorgängen sicherer wird, wenn er die Fahrzeugabmaße auch selber besser abschätzen kann. Das lernende System kann sich an das Fahrverhalten des Fahrers anpassen und zukünftig in der von dem Fahrer gewünschten Weise reagieren, wobei jedoch sicherheitsrelevante Grenzen nicht über- bzw. unterschritten werden sollen, z.B. bei gewählten Geschwindigkeiten oder zu berücksichtigenden Abständen. Bevorzugt soll das Fahrerassistenzsystem eine solche Überschreitung der Grenzwerte sich nicht als eigenes Verhalten zu eigen machen. Somit wird eine Irritation des Fahrers verringert, da er Reaktionen des Fahrerassistenzsystems besser vorhersehen kann und die Unterstützung durch das Fahrerassistenzsystem mehr seiner Fahrweise entspricht. Hierdurch wird auch das Vertrauen des Fahrzeugnutzers in das Fahrerassistenzsystem weiter erhöht. Ferner können aber auch die Messtoleranzen des Fahrerassistenzsystems durch den Lernvorgang verringert werden.

Ferner ist es vorteilhaft, in Situationen, in denen eine von dem Fahrerassistenzsystem für erforderlich gehaltene Fahrhandlung nötig ist, um einen Schaden zu vermeiden, die Möglichkeiten des Fahrers zu beschränken, die Fahrhandlung abzubrechen. Denn eine Schadensvermeidung kann nur im Interesse des Fahrers liegen. Eine solche Situation kann z.B. bei einem automatischen Bremsvorgang vor einem Auffahren auf ein Hindernis oder bei einem drohenden Zusammenstoß bei einem Spurwechsel vorliegen.

Weiterhin ist es vorteilhaft, bei der Fahrsituation auch den Fahrerzustand zu berücksichtigen. Über objektiv messbare Werte wie z.B. den Hautwiderstand oder die Pulsfrequenz bzw. über Werte der über eine Kamera ermittelten Lidschlagsfrequenz, über eine Überwachung der Genauigkeit des Spurhaltens oder über eine Überwachung der Bedienung von Geräten im Fahrzeug kann eine Aufmerksamkeit des Fahrers ermittelt werden. Ist die Aufmerksamkeit niedrig, wird das Fahrerassistenzsystem eher bereit sein, Aufgaben für den Fahrer zu übernehmen. So wird der Fahrer beispielsweise auffälliger gefragt, ob er eine Aufgabe übernehmen will oder gegebenenfalls kann die Aufgabe auch automatisch übernommen werden, wenn der Fahrer nicht widerspricht, während der Fahrer bei hoher Aufmerksamkeit diese Aufgabe aktiv hätte anfordern müssen.

Insbesondere ist es vorteilhaft, die Bewertung der Fahrsituation und damit auch die aus der Bewertung gezogenen Schlüsse für durchzuführende Fahrhandlungen von der Person des Fahrers abhängig zu machen. Bevorzugt wird für jeden Fahrer ein entsprechendes Profil gespeichert und während der Fahrt aktualisiert, sodass jeder Fahrer ein von ihm gewünschtes Verhalten des Fahrerassistenzsystems vorfinden wird. Auf diesem Profil kann für die weitere Kooperation zwischen dem Fahrer und dem Fahrerassistenzsystem aufgebaut werden.

Es ist ferner vorteilhaft, eine Bestätigung einer Fahrhandlung und/oder eine Abbruchanweisung entweder aus einer unmittelbaren Eingabe des Fahrers oder aus einer Steuerungsanweisung des Fahrers zur Steuerung des Fahrzeugs zu entnehmen. Hierdurch wird der Dialog zwischen dem Fahrer und dem Fahrerassistenzsystem vereinfacht, da ein kurzer Dialogweg zwischen dem Fahrer und dem Fahrerassistenzsystem geschaffen wird. Insbesondere kann aus der Reaktion des Fahrers bei der Steuerung des Fahrzeugs selbst vorteilhaft entnommen werden, ob der Fahrer mit der vorgeschlagenen Fahrhandlung einverstanden ist.

Es ist ferner vorteilhaft, bei der Bewertung der Fahrsituation die Aufmerksamkeit des Fahrers zu berücksichtigen. So können z.B. Warnungen, Hinweise auf durchzuführende Fahrhandlungen oder ähnliche Ausgaben dann früher vorgenommen werden, wenn der Fahrer müde oder aus sonstigem Grund unaufmerksam ist.

Die Verwendung des erfindungsgemäßen Verfahrens ist insbesondere vorteilhaft bei Einparkvorgängen, bei Überholvorgängen oder bei einem Geschwindigkeitsgeregelten Folgefahren, da hierbei Fahrvorgänge vorliegen, die einerseits sehr komplex sind und für die andererseits bereits Ansätze zur zumindest teilweisen Automatisierung der Durchführung des Fahrvorgangs bestehen und von Fahrern auch gewünscht werden.

### Zeichnung

Ausführungsbeispiele der Erfindung sind in der Zeichnung dargestellt und in der nachfolgenden Beschreibung näher erläutert. Es zeigen
- Figur 1: ein Ausführungsbeispiel für ein Fahrerassistenzsystem zur Durchführung des erfindungsgemäßen Verfahrens,
- Figur 2: einen Verfahrensablauf für ein Ausführungsbeispiel eines erfindungsgemäßen Verfahrens,
- Figur 3: ein Schaubild für die Interaktion zwischen dem Fahrerassistenzsystem, den Fahrzeugsystemen und dem Fahrer.

### Beschreibung des Ausführungsbeispiels

Das erfindungsgemäße Verfahren kann beliebige Fahrerassistenzsysteme in einem Fahrzeug umfassen, wobei nur einzelne Systeme umfasst sein können, bevorzugt aber die gesamte Fahrerinteraktion erfindungsgemäß ausgeführt ist. Insbesondere kann das Fahrerassistenzsystem Einparkhilfen umfassen, bei denen insbesondere eine Lenkunterstützung bzw. eine motorische Unterstützung vorliegt. Ferner kann auch ein Überholvorgang oder ein Folgefahren mit einer Abstandregelung und einer automatischen, an den Abstand angepassten Geschwindigkeitsregelung mit dem erfindungsgemäßen Verfahren gesteuert werden.

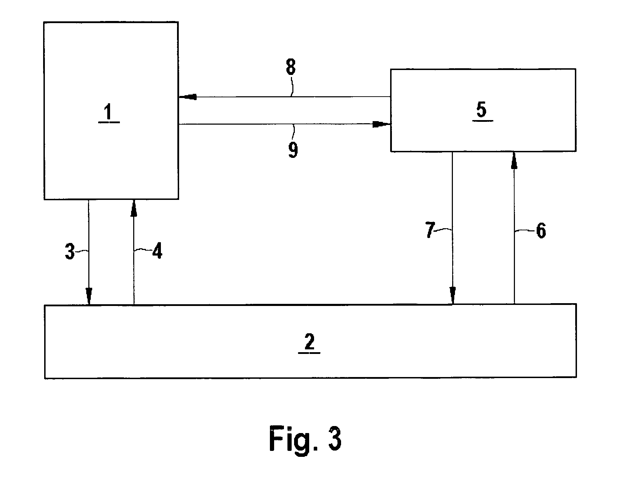

Der prinzipielle Dialog zwischen dem Fahrer und einem Assistenzsystem ist in der Figur 3 dargestellt. Der Fahrer 1 ist in einem Dialog mit der Fahrzeugsteuerung 2. Er kann durch Benutzereingriffe 3 das Fahrzeug steuern, indem er Bedieneingaben an dem Fahrzeug vornimmt. Der Fahrer kann z.B. das Lenkrad drehen, Fußpedale betätigen oder Bedienelemente schalten. Umgekehrt können dem Fahrer über Ausgaben 4 von dem Fahrzeug Warninformationen, z.B. in einer zentralen Anzeigeeinheit vor dem Fahrer, dargestellt werden. Dem Fahrer können jedoch auch haptische Rückmeldungen gegeben werden. Z.B. kann bei einem Anspringen des ABS-Systems das Bremspedal rütteln bzw. der Fahrer kann bei einem maximalen Anschlagwinkel einen Anschlag der Lenkung erreichen. Ein Fahrerassistenzsystem 5 tritt ebenfalls in Dialog mit der eigentlichen Fahrzeugsteuerung 2 des Fahrzeugs. Über eine Sensorabfrage 6 kann die aktuelle Fahrsituation des Fahrzeugs ermittelt werden. Hierauf kann das Fahrerinformationssystem reagieren, indem es über eine Steuerung 7 Parameter der Fahrzeugsteuerung 2 verändert. In erfindungsgemäßer Weise findet zudem auch ein unmittelbarer Dialog zwischen dem Fahrerassistenzsystem 5 und dem Fahrer statt. Über eine Ausgabe 8 wird der Fahrer z.B. über eine von dem Fahrerassistenzsystem vorzunehmende oder bereits eingeleitete Steuermaßnahme informiert. Der Fahrer 1 kann durch eine Reaktion 9 dem Fahrerassistenzsystem unmittelbar mitteilen, ob die vorgeschlagene, bzw. eingeleitete oder bereits begonnene Reaktion auf die erfasste Fahrsituation fortgeführt, abgebrochen oder korrigiert werden soll. Der Fahrer kann somit entscheiden, ob er dem Fahrerassistenzsystem in dem jeweiligen Fall die Steuerung überlassen will oder ob er selber die Handlung vornehmen möchte. Durch den Dialog 8, 9 kann in jedem Einzelfall gesondert eine Entscheidung erfolgen.

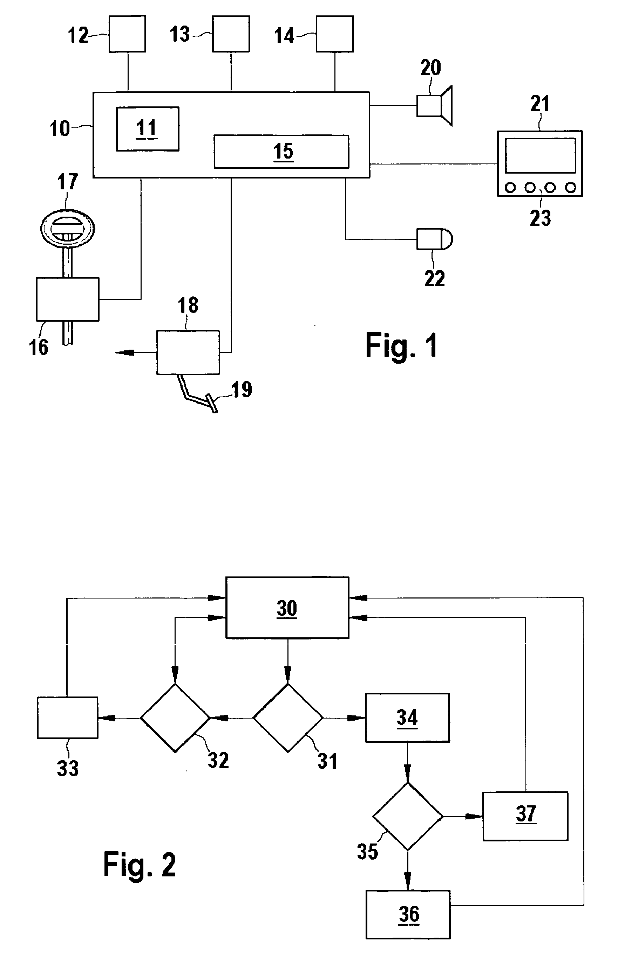

In der Figur 1 ist ein Fahrzeugsystem mit einer Einparkhilfe beispielhaft als Fahrerassistenzsystem für die Durchführung des erfindungsgemäßen Verfahrens dargestellt. Das Fahrerassistenzsystem 10 weist eine Recheneinheit 11 auf, die die Bewertung der aktuellen Fahrsituation durchführt. Hierzu ist das Fahrerassistenzsystem 10 mit verschiedenen Sensoren verbunden, die die aktuelle Fahrsituation erfassen. Dies können z.B. Abstandssensoren 12 sein, die an der Fahrzeugaußenkontur angeordnet sind. Die Abstandssensoren 12 sind beispielsweise als Ultraschall-Abstandssensoren ausgeführt und messen den Abstand zu Hindernissen in der Umgebung des Fahrzeugs. Ferner kann ein Geschwindigkeitssensor 13 vorgesehen sein, der die aktuelle Fahrzeuggeschwindigkeit ermittelt und an das Fahrerassistenzsystem meldet. Ferner kann auch eine Kamera 14 vorgesehen sein, die die Fahrzeugumgebung optisch erfasst. In der Recheneinheit 11 werden die von den Sensoren 12, 13, 14 gelieferten Daten verarbeitet und unter Zugriff auf eine Speichereinheit 15 ausgewertet. In der Speichereinheit 15 sind z.B. Grenzwerte für bestimmte Fahrsituationen abgelegt. Dies können z.B. insbesondere bei einer Einparkhilfe vorgeschriebene Mindestabstände zu Hindernissen in der Fahrzeugumgebung sein. Ferner können auch die Abmaße des Fahrzeugs gespeichert sein, wobei diese gegebenenfalls von der aktuellen Ausstattung, z.B. einer montierten Anhängerkupplung, abhängig sein können. In der Speichereinheit 15 sind bevorzugt Profile für jeweilige Fahrer vorgesehen. Sowohl die Abstandswahl, als auch die Lenkgeschwindigkeit bzw. die Einparkgeschwindigkeit und die Einparksicherheit im Sinne des fahrerischen Könnens können von Fahrer zu Fahrer variieren. Wie die Unterstützung für den einzelnen Fahrer erfolgen soll, z.B. bei verschiedenen Abstandswerten, kann entsprechend in der Speichereinheit 15 mit abgelegt werden. Das Fahrerassistenzsystem 10 ist ferner mit einer motorischen Lenksteuerung 16 versehen, mit der ein entsprechender, von dem Fahrerassistenzsystem 10 vorgegebener Lenkwinkel motorisch eingestellt werden kann. Der Fahrer kann diesen motorisch eingestellten Lenkwinkel über eine Betätigung des Lenkrades 17 korrigieren. Ferner ist das Fahrerassistenzsystem 10 auch mit einer Bremsensteuerung 18 verbunden. Einerseits kann hierbei eine von einem Fahrer vorgenommene Betätigung des Bremspedals 19 erfasst werden. Andererseits ist es aber auch möglich, dass Fahrzeugbremsen, die mit der Bremsensteuerung 18 verbunden sind und in der Figur 1 aus Gründen der Übersichtlichkeit nicht mehr dargestellt sind, über das Fahrerassistenzsystem und die Bremsensteuerung 18 automatisch betätigt werden.

Hat das Fahrerassistenzsystem nach Auswertung der von den Sensoren 12, 13, 14 gelieferten Daten eine Fahrsituation ermittelt, bei der es ein Eingreifen für erforderlich hält, so wird ein Benutzer auf dieses Eingreifen hingewiesen. Hierzu ist das Fahrerassistenzsystem z.B. mit einem Lautsprecher 20 und/oder mit einer Anzeigeeinheit 21 verbunden. Stellt das Fahrerassistenzsystem 10 z.B. fest, dass ein Fahrer versucht in eine Parklücke einzuparken, die jedoch recht eng ist, kann dem Fahrer in einer ersten Ausführungsform über die Ausgabeeinheiten 20, 21 folgender Hinweis ausgegeben werden: "enge Parklücke! Wünschen Sie eine motorische Unterstützung?". Der Fahrer kann nun entscheiden, ob er das automatische Einparken dem Fahrerassistenzsystem 10 überlassen will oder ob er den Einparkvorgang selbst durchführen will. Den Wunsch, das Einparken automatisch vornehmen zu lassen, kann der Wunsch dem Fahrerassistenzsystem z.B. mittels einer Spracheingabe über ein Mikrofon 22 mitteilen. Er spricht z.B. den Befehl "Bitte einparken" in das Mikrofon. Alternativ kann auch die Betätigung von Bedienelementen 23 erfolgen, die z.B. an der Anzeige, am Lenkradmodul oder an einer anderen Stelle an der Armaturentafel angeordnet sind. Eine Ablehnung wird z.B. auch dann erfasst, wenn der Fahrer selbst beginnt, in die Parklücke hineinzufahren. Bestätigt der Fahrer den automatischen Einparkwunsch, so berechnet das Fahrerassistenzsystem dagegen eine Trajektorie und wird das Fahrzeug durch Einwirkung auf den Triebstang und insbesondere auf die Lenkung automatisch in die Parklücke einparken. Der Fahrer kann jedoch stets korrigierend eingreifen, wobei ein Eingreifen von dem System überprüft wird und gegebenenfalls der automatische Einparkvorgang an die vorgenommene Korrektur angepasst wird. In einer weiteren Ausführungsform kann auch nur die Lenkung automatisch erfolgen, während der Fahrer nach wie vor Gas gibt, bremst, und gegebenenfalls die Fahrtrichtung durch eine entsprechende Gangwahl ändert.

Wünscht der Fahrer keine Unterstützung, so wird er lediglich vor Hindernissen in der Umgebung des Fahrzeugs gewarnt. Ein Eingriff in die Fahrzeugsteuerung unterbleibt zunächst, wird aber dann erfolgen kurz bevor der Fahrer mit einem Hindernis zusammenstößt. Ähnlich einem Verhalten "Fahrlehrer/Fahrschüler" kann der Fahrer den Einparkvorgang somit in Eigenregie durchrühren, wird aber dennoch vor Schäden bewahrt. Ein solches Einparken ohne Unterstützung könnte z.B. dann sinnvoll sein, wenn bei der ersten Messung durch das Fahrerassistenzsystem z.B. eine Person die Parklücke teilweise blockiert hat und sie dem System enger erschien. Gleiches könnte auftreten, wenn ein Fahrer eines Fahrzeugs, das benachbart zu der Parklücke geparkt ist, die Fahrzeugtür kurzfristig geöffnet hat, um einzusteigen. In einem solchen Fall kann der Fahrer besser beurteilen, dass er z.B. nach kurzem Abwarten bequem und ohne Unterstützung in eine breite Parklücke einfahren kann. Hat der Einparkvorgang bereits begonnen, so kann der Fahrer durch ein Eingreifen jederzeit den Einparkvorgang abbrechen oder geringfügig korrigieren.

Eine Durchführung des erfindungsgemäßen Verfahrens ist anhand der Figur 2 erläutert. In einem Erfassungsschritt 30 wird zunächst eine aktuelle Fahrsituation des Fahrzeugs ermittelt. In einer bevorzugten Ausgestaltung wird hierbei auch die Aufmerksamkeit des Fahrers z.B. über die Häufigkeit der Bedienung von Geräten im Fahrzeug, z.B. eine Navigationsvorrichtung, über körperliche Messwerte des Fahrers, aus seinem Fahrverhalten oder über eine Beobachtung der Augen des Fahrers ermittelt. Ferner können Geschwindigkeiten, Abstände zu Hindernissen in der Umgebung bei stehendem oder fahrendem Fahrzeug sowie sonstige Fahrtbedingungen, wie z.B. Straßenglätte, erfasst werden. Ausgehend von dem Erfassungsschritt 30 wird zu einem ersten Prüfschritt 31 verzweigt. In dem ersten Prüfschritt wird die Fahrsituation bewertet und in Abhängigkeit von der Bewertung unter Berücksichtigung der Person des Fahrers, der Aufmerksamkeit des Fahrers und der erfassten Sensordaten geprüft, ob eine Fahrhandlung erfolgen soll. Unter einer Fahrhandlung soll hierbei verstanden werden, dass von einem bloßen Folgen der Straße mit konstanter Geschwindigkeit abgewichen werden soll. Eine Fahrhandlung kann z.B. ein Verzögern oder ein Beschleunigen des Fahrzeugs umfassen. Eine Fahrhandlung kann auch einen Lenkeingriff, also ein Lenkeinschlag nach links oder rechts, umfassen, der über eine bloße Korrektur des Geradeauslaufs des Fahrzeugs hinausgeht. Für den Fall, dass die aktuelle Fahrsituation nach Bewertung durch das Fahrerassistenzsystem keinen solchen Assistenzeingriff erfordert, wird zu einem zweiten Prüfschritt 32 verzweigt. In dem zweiten Prüfschritt 32 wird überprüft, ob der Fahrer selbsttätig eine entsprechende Fahrhandlung vorgenommen hat, die in den Einflussbereich eines Fahrerassistenzsystems fallen würde. Hat keine solche Handlung vorgelegen, so wird zu dem Erfassungsschritt 30 zurückverzweigt, wobei dieser erneut ausgeführt wird. Wird dagegen eine Fahrhandlung des Fahrers erfasst, so wird diese Fahrhandlung mit der entsprechenden Situation verglichen. Stellt sich z.B. hierbei heraus, dass bei einem abstandsgeregelten Folgefahren ein Fahrer einen größeren Sicherheitsabstand zu einem vorausfahrenden Fahrzeug einhält, als dies das Fahrerassistenzsystem einregeln würde, so wird dieser Wert für die Zukunft an die von dem Fahrer tatsächlich vorgenommen Einstellung korrigiert. In einem Änderungsschritt wird diese vorgenommene Änderung in der Speichereinheit 15 abgelegt und steht somit für den weiteren Betrieb des Fahrerassistenzsystems 10 zur Verfügung. Anschließend wird ebenfalls zu dem Erfassungsschritt 30 zurück verzweigt. Wird in dem ersten Prüfschritt 31 festgestellt, dass eine Fahrhandlung erforderlich oder zumindest empfehlenswert wäre, so wird zu einem Ausgabeschritt 34 verzweigt. In dem Ausgabeschritt 34 wird an den Fahrer in einer ersten Ausführungsform die Frage ausgegeben, ob er wünscht, dass eine bestimmte Fahrhandlung, z.B. ein Einparken oder eine Geschwindigkeitsregelung auf ein vorausfahrendes Fahrzeug erfolgen soll. Gibt der Fahrer keine Bestätigung, so unterbleibt die automatische Regelung. In einer anderen Ausführungsform kann dem Fahrer auch der Hinweis gegeben werden, dass eine automatische Regelung erfolgt, wenn der Fahrer keinen Abbruchbefehl eingibt. Die automatische Unterstützung kann hierbei in einer Ausführungsform erst zeitverzögert starten, kann aber auch unmittelbar mit der Ausgabe der Frage an den Fahrer in dem Ausgabeschritt 34 beginnen. In einem anschließenden Abfrageschritt 35 wird geprüft, ob der Fahrer sich mit dem Vorschlag des Fahrerassistenzsystems einverstanden erklärt hat oder ob er den Vorschlag ablehnt. Erklärt er sich mit dem Vorschlag einverstanden, so wird zu einem automatischen Steuerungsschritt 36 verzweigt. Die entsprechende Fahrhandlung wird von dem Fahrerassistenzsystem veranlasst. Anschließend wird zu dem Erfassungsschritt 30 zurück verzweigt. Lehnt der Benutzer die vorgeschlagene Handlung ab, so wird in einem Auswerteschritt 37 diese Ablehnung gespeichert und ausgewertet. Lehnt ein Fahrer eine Unterstützung z.B. mehrfach ab, so wird sie ihm später nicht mehr oder seltener vorgeschlagen werden.

Das erfindungsgemäße Verfahren wird im Fahrzeug in einer ersten Ausführungsform ständig durchgeführt, sodass jede Fahrsituation erfasst wird, in der das Fahrerassistenzsystem den Fahrer unterstützen kann. In einer anderen Ausführungsform kann eine Unterstützung durch das Fahrerassistenzsystem jedoch auch durch den Benutzer konkret angefordert werden. Die Abfrage, ob dann im Anschluss eine Maßnahme tatsächlich erfolgen soll, ist hierdurch jedoch nicht berührt.

Neben der Eingabe über das Mikrofon 22 kann jedoch ein Fahrer auch durch konkudentes Handeln das Fahrerassistenzsystem auffordern, eine entsprechende Handlung durchzuführen. Sucht ein Fahrer z.B. eine freie Parklücke und fordert ihn das Fahrerassistenzsystem auf, anzuhalten und entsprechend die Lenkung einzuschlagen, so kann der Fahrer durch das Abbremsen des Fahrzeugs und durch ein leichtes Einschlagen der Lenkung das Fahrerassistenzsystem dazu anstoßen, die weitere Einfahrt in die Parklücke selbständig vorzunehmen.

In einem weiteren Ausführungsbeispiel kann das erfindungsgemäße Verfahren für einen Überholvorgang auf der Autobahn eingesetzt werden. Ohne eine Unterstützung durch ein Fahrerassistenzsystem muss der Fahrer bei einem derartigen Überholvorgang eine Reihe von Teilprozessen bearbeiten. Hierzu gehören die Abstandsregelung zum vorausfahrenden Fahrzeug, das Abbremsen und gegebenenfalls das Beschleunigen des Fahrzeugs, die Überwachung des rückwärtigen Verkehrs, die Überwachung des Fahrmanövers des vorausfahrenden Fahrzeugs, die Betätigung des Blinkers und die Fahrzeugquerführung. Zudem müssen zahlreiche Entscheidungsprozesse, z.B. die Entscheidung zum Einleiten des Überholvorgangs, getroffen werden. Alle oder nur einige dieser Prozesse können nun erfindungsgemäß durch das Fahrerassistenzsystem entweder unterstützt oder auch komplett übernommen werden. Der Fahrer kann jedoch auch beliebige Teilprozesse selbst bearbeiten. In jedem Einzelfall wird erfindungsgemäß entschieden, wer den jeweiligen Teilprozeß ausüben soll. Hierbei wird das Fahrerassistenzsystem zunächst aus der Historie des Fahrverhaltens eingestellt. Wenn das Fahrerassistenzsystem bei einem vorhergehenden Überholvorgang zunächst ein starkes Abbremsen des Fahrers detektiert hat, so wird es bei der folgenden Annäherung an ein langsameres Fahrzeug dem Fahrer anbieten, den Fahrer den richtigen Moment für den Beginn des Überholvorgangs durch ein Signal darzustellen und hierbei den rückwärtigen Verkehr zu überwachen, um ein Abbremsen zu verhindern. Alternativ kann das System auch die komplette Längsführung des Fahrzeugs übernehmen. Das Angebot kann z.B. davon abhängig gemacht werden, wie gut die Sicht ist. Bei starkem Regen oder wenn der Fahrer durch eine Nebenaufgabe abgelenkt ist, kann der Hinweis auf die Übernahme durch das Fahrerassistenzsystem z.B. optisch und akustisch erfolgen, während gegenüber einer Situation bei guter Sicht und hoher Aufmerksamkeit des Fahrers lediglich ein Hinweis in der Anzeige erscheint. Z.B. kann dem Fahrer die Übernahme eines Teilprozesses des Überholvorgangs durch eine kurze sprachliche Anfrage über den Lautsprecher 20 ausgegeben werden. Der Fahrer antwortet hierauf indem er annimmt oder ablehnt, z.B. über das Mikrofon 22 oder z.B. über einen in der Figur nicht gezeigten Bedienknopf, der an dem Lenkrad 17 angeordnet ist. Ohne ein Umgreifen zu einem anderen Bedienelement kann der Fahrer hiermit seine Zustimmung oder seine Ablehnung kenntlich machen. Wird nur die Überwachung des rückwärtigen Verkehrs übernommen, so liegen alle anderen Teilaufgaben weiterhin bei dem Fahrer. Der Fahrer kann jedoch auch durch ein bestimmtes Sprachkommando einen Teilprozeß an das Fahrerassistenzsystem abgegeben bzw. er kann allgemein anfragen, welche Hilfestellungen aktuell zur Verfügung stehen. Welche Unterstützung zur Verfügung steht, ist dabei einerseits von der Fahrsituation, andererseits aber auch von der technischen Ausstattung des Fahrzeugs abhängig. Nachdem der Fahrer die Unterstützung angefordert und das System ihm die Unterstützung angeboten hat, kann er diese Unterstützung annehmen oder auch an dieser Stelle noch ablehnen.

## Patentansprüche

1. Verfahren zur Fahrerunterstützung in einem Fahrzeug, wobei ein Fahrerassistenzsystem eine Fahrsituation des Fahrzeugs überwacht, wobei die Fahrsituation zur Ermittlung einer erforderlichen Fahrhandlung bewertet wird, wobei die erforderliche Fahrhandlung dem Fahrer mitgeteilt wird, wobei die erforderliche Fahrhandlung nach einer Bestätigung, bei einem Ausbleiben einer Abbruchanweisung oder bis zur Eingabe einer Abbruchanweisung oder Korrekturanweisung automatisch ausgeführt wird, **dadurch gekennzeichnet, dass** bei der Bewertung der Fahrsituation die Aufmerksamkeit des Fahrers berücksichtigt wird.

2. Verfahren nach Anspruch 1, **dadurch gekennzeichnet, dass** bei einer eingegebenen Abbruchanweisung eine Vorschrift zur Bewertung der Fahrsituation angepasst wird.

3. Verfahren nach einem der vorherigen Ansprüche, **dadurch gekennzeichnet, dass** in besonderen Fahrsituationen, in denen ein Auslassen oder ein Abbrechen der automatisch vorgenommenen Fahrhandlung gefährlich ist, die Fahrhandlung automatisch gestartet oder trotz Eingabe einer Abbruchanweisung fortgesetzt wird.

4. Verfahren nach einem der vorherigen Ansprüche, **dadurch gekennzeichnet, dass** bei einer Handlung des Fahrers, ohne dass die Steuereinheit eine erforderliche Fahrhandlung des Fahrers ermittelt hat, eine Vorschrift zur Bewertung der Fahrsituation überprüft und gegebenenfalls korrigiert wird.

5. Verfahren nach einem der vorherigen Ansprüche, **dadurch gekennzeichnet, dass** bei der Bewertung der Fahrsituation der Fahrerzustand mit berücksichtigt wird.

6. Verfahren nach einem der vorherigen Ansprüche, **dadurch gekennzeichnet, dass** die Bewertung der Fahrsituation in Abhängigkeit von der Person des Fahrers erfolgt.

7. Verfahren nach einem der vorherigen Ansprüche, **dadurch gekennzeichnet, dass** eine Bestätigung und/oder eine Abbruchanweisung aus einer unmittelbaren Eingabe des Fahrers oder aus einer Steueranweisung des Fahrers zur Steuerung des Fahrzeugs ermittelt wird.

8. Verwendung eines Verfahrens nach einem der vorherigen Ansprüche zum Einparken eines Fahrzeugs, zur Durchführung eines Überholvorgangs oder zur Regelung einer Abstandsgesteuerten Geschwindigkeitsregelung.

## Claims

1. Method for assisting a driver in a vehicle, wherein a driver assistance system monitors a driving situation of the vehicle, wherein the driving situation is evaluated in order to determine the necessary driving action, wherein the driver is informed of the necessary driving action, wherein the necessary driving action is carried out automatically after a confirmation, in the absence of an abort instruction or until an abort instruction or correction instruction is input, **characterized in that** when the driving situation is evaluated the driver's attentiveness is taken into account.

2. Method according to Claim 1, **characterized in that** when an abort instruction is input a rule for evaluating the driving situation is adapted.

3. Method according to one of the preceding claims, **characterized in that** in particular travel situations in which it is dangerous to omit or abort the automatically performed driving action, the driving action is started automatically or is continued despite the inputting of an abort instruction.

4. Method according to one of the preceding claims, **characterized in that** in the event of an action by the driver without the control unit having determined a necessary driving action of the driver, a rule for evaluating the driving situation is checked and corrected if appropriate.

5. Method according to one of the preceding claims, **characterized in that** the state of the driver is also included in the evaluation of the driving situation.

6. Method according to one of the preceding claims, **characterized in that** the evaluation of the driving situation takes place as a function of the driver's person.

7. Method according to one of the preceding claims, **characterized in that** a confirmation and/or an abort instruction is determined from the immediate inputting by the driver or from a control instruction by the driver for controlling the vehicle.

8. Use of a method according to one of the preceding claims for parking a vehicle, for carrying out an overtaking manoeuvre or for controlling a distance-controlled cruise controller.

## Revendications

1. Procédé d'assistance au conducteur d'un véhicule selon lequel un système d'assistance au conducteur surveille une situation de conduite du véhicule,
la situation de conduite étant exploitée pour déterminer une manoeuvre de conduite nécessaire, la manoeuvre de conduite nécessaire étant communiquée au conducteur,
la manoeuvre de conduite nécessaire étant exécutée automatiquement après une confirmation, en l'absence d'indication d'arrêt ou jusqu'à l'entrée d'une indication d'arrêt ou d'une indication de correction,
**caractérisé en ce qu'**
en exploitant la situation de conduite, on tient compte de l'attention du conducteur.

2. Procédé selon la revendication 1,
**caractérisé en ce que**
pour une indication d'arrêt, introduite, une prescription est adaptée pour exploiter la situation de conduite.

3. Procédé selon l'une quelconque des revendications précédentes,
**Caractérisé en ce que**
dans des situations de conduite particulières dans lesquelles l'absence ou l'arrêt d'une manoeuvre de conduite effectuée automatiquement sont dangereux, la manoeuvre de conduite est lancée automatiquement ou est poursuivie malgré l'entrée d'une indication d'arrêt.

4. Procédé selon l'une quelconque des revendications précédentes,
**caractérisé en ce que**
pour une manoeuvre du conducteur sans que l'unité de commande n'ait déterminé une manoeuvre de conduite nécessaire pour le conducteur, on vérifie une prescription d'exploitation de la situation de conduite et le cas échéant on la corrige.

5. Procédé selon l'une quelconque des revendications précédentes,
**caractérisé en ce que**
pour l'évaluation de la situation de conduite, on tient compte de l'état du conducteur.

6. Procédé selon l'une quelconque des revendications précédentes,
**caractérisé en ce que**
l'évaluation de la situation de conduite se fait en fonction de la personnalité du conducteur.

7. Procédé selon l'une quelconque des revendications précédentes,
**caractérisé en ce qu'**
on détermine une confirmation et/ou une indication d'arrêt à partir de l'entrée directe par le conducteur ou à partir d'une indication de commande du conducteur pour commander le véhicule.

8. Utilisation du procédé selon l'une quelconque des revendications précédentes pour ranger le véhicule dans un emplacement de stationnement, pour exécuter une manoeuvre de dépassement ou pour réguler un système de régulation de vitesse commandé en fonction de la distance.
